Europäisches Patentamt

European Patent Office

Office européen des brevets

(11) Veröffentlichungsnummer: **0 003 997**
**B1**

(12) **EUROPÄISCHE PATENTSCHRIFT**

(45) Veröffentlichungstag der Patentschrift:
05.05.82

(51) Int. Cl.³: **H 04 N 3/14, H 04 N 5/197**

(21) Anmeldenummer: **79100516.8**

(22) Anmeldetag: **21.02.79**

(54) Elektronische Kamera mit automatischer Einstellung der Bildhelligkeit und Verfahren zu ihrem Betrieb.

(30) Priorität: **13.03.78 DE 2810806**

(43) Veröffentlichungstag der Anmeldung:
**19.09.79 Patentblatt 79/19**

(45) Bekanntmachung des Hinweises auf die Patenterteilung:
**05.05.82 Patentblatt 82/18**

(84) Benannte Vertragsstaaten:
**BE FR GB IT NL**

(56) Entgegenhaltungen:
**DE–A–2 447 299**
**DE–B–2 810 806**
**US–A–3 934 161**

(73) Patentinhaber: **SIEMENS AKTIENGESELLSCHAFT Berlin und München, Postfach 22 02 61, D-8000 München 22 (DE)**

(72) Erfinder: **Koch, Rudolf, Dipl.-Ing., Nimrodstrasse 12, D-8034 Germering-Unterpfaffenhofen (DE)**
Erfinder: **Herbst, Heiner, Dr., Am See 2, D-8013 Haar (DE)**

## Verfahren zum Betrieb einer elektronischen Kamera mit einem Sensorteil aus MOS-Kondensatoren und Vorrichtung zur Durchführung des Verfahrens

Die Erfindung betrifft ein Verfahren zum Betrieb einer elektronischen Kamera mit einem Sensorteil aus MOS-Kondensatoren zur Erfassung eines optischen Bildes und einer automatischen Einstellung der Bildhelligkeit, bei dem an die Sensor-Kondensatoren derartige Spannungen gelegt werden, dass in ihnen Minoritätsträger in einer derartigen Menge, die der Helligkeit der Bildpunkte entspricht, optisch erzeugt und gespeichert werden (Integration), und dabei hervorgerufene Signale periodisch unter Entleerung der Kondensatoren ausgelesen werden. Die Erfindung betrifft ferner eine Vorrichtung zur Durchführung des Verfahrens.

In der Videotechnik werden in zunehmendem Masse Kameras entwickelt, bei denen das von dem optischen Abbildungssystem der Kamera entworfene Bild von einem Sensorteil erfasst wird, der aus rasterförmig in der Abbildungsebene verteilten MOS-Kondensatoren gebildet wird. Bei Bestrahlung werden im Halbleitersubstrat eines derartigen Kondensators Ladungsträgerpaare optisch erzeugt. Wird nun z.B. bei einem p-dotierten Halbleiter der Substratanschluss positiv gegenüber der anderen Elektrode vorgespannt, so werden die positiven Majoritätsträger unter der anderen Elektrode gesammelt (sog. «Akkumulation»), während die entstehenden Minoritätsträger teilweise im Substrat rekombinieren, teilweise zum Substratanschluss abdiffundieren. Beim Betrieb als Sensorelement werden die Elektroden des MOS-Kondensators jedoch im umgekehrten Sinn vorgespannt, so dass nun die Majoritätsträger vom Substratanschluss abgezogen werden, während die optisch erzeugten Minoritätsträger im Kondensator gesammelt werden. Die Menge der angesammelten Minoritätsträger nimmt dabei mit der Dauer und Intensität der Belichtung zu und stellt somit ein Mass für die Helligkeit des auf den entsprechenden MOS-Kondensator fallenden Bildpunktes dar.

Die einzelnen MOS-Kondensatoren (Sensorelemente) werden sodann nacheinander angesteuert, wobei entweder die darin gesammelten Ladungspakete nach dem Prinzip der Ladungskopplung in eine Ausgangsstufe verschoben werden (CCD-Sensor) oder nach dem Prinzip der Ladungsinjektion ins Substrat abgegeben werden. In beiden Fällen entsteht an der Ausgangsstufe eine Folge von Spannungssignalen, die zum Videosignal verarbeitet wird, während die Sensorelemente selbst von Minoritätsträgern entleert werden und somit für die Aufnahme des nächsten Bildes bereit sind.

Bei geringer Bestrahlungsstärke entstehen in den MOS-Kondensatoren nur wenig Minoritätsträger und somit ein Signal, das sich nicht stark vom Geräuschpegel abhebt. Bei hoher Bestrahlungsstärke kann der MOS-Kondensator jedoch nicht mehr alle optisch erzeugten Minoritätsträger speichern. Es ist daher nötig, die Helligkeit des Bildes auf einem Mittelwert zu halten, der noch genügend Spielraum für die Helligkeitsunterschiede zwischen den einzelnen Bildpunkten (sog. Dynamik) bietet. Um diese angestrebte optimale mittlere Bestrahlungsstärke unabhängig von der Helligkeit des aufzunehmenden Objektes zu erreichen, werden z.B. Fernsehkameras im allgemeinen mit einer Belichtungsautomatik versehen. Diese besteht aus einem elektronischen Sensor zur Ermittlung der Bildhelligkeit und einer mechanischen Blende mit variabler Öffnung zur Regelung der Bestrahlungsstärke. Diese mechanische Verstellung von Blenden ist relativ aufwendig und träge.

Aus DE-A-2 447 299 ist ein Verfahren zum Betrieb einer elektronischen Kamera mit einem Sensorteil aus MOS-Kondensatoren zur Erfassung eines optischen Bildes und einer automatischen Einstellung der Bildhelligkeit bekannt, bei dem an die Sensorkondensatoren derartige Spannungen gelegt werden, dass in ihnen Minoritätsträger in einer derartigen Menge, die der Helligkeit der Bildpunkte entspricht, optisch erzeugt und gespeichert werden (Integration), und dabei hervorgerufene Signale periodisch unter Entleerung der Kondensatoren ausgelesen werden. Dieses bekannte Verfahren sieht vor, dass die Sensorkondensatoren zwischen dem periodischen Auslesen jeweils nur für eine bestimmte Zeitspanne so vorgespannt werden, dass eine Integration ermöglicht ist. Während der verbleibenden Zeitspanne werden die Kondensatoren mit einem solchen Potential vorgespannt, bei dem eine Integration nicht möglich ist. Die bestimmte Zeitspanne wird bei dem bekannten Verfahren so geregelt, dass die integrierten und später ausgelesenen Signale gemittelt über alle Kondensatoren einer angestrebten Bildhelligkeit entsprechen. Aus der genannten Druckschrift ist ferner bekannt, dass als ein Istwert der Bildhelligkeit ein der Summe der Signale aller MOS-Kondensatoren entsprechender Wert gebildet wird und die Integrationsdauer durch Verschieben des Umschaltzeitpunktes verlängert bzw. verkürzt wird, wenn der Istwert einen vorgegebenen Sollwert nicht erreicht bzw. übersteigt.

Der Erfindung liegt die Aufgabe zugrunde, bei einer elektronischen Kamera mit periodischem Auslesen des erfassten Bildes, insbesondere einer Fernsehkamera, eine automatische Einstellung der Bildhelligkeit anzugeben, die aus rein elektronischen Bauteilen aufgebaut ist, wobei eine besonders einfache und zuverlässige Bestimmung des Istwertes der Bildhelligkeit ermöglicht ist.

Die der Erfindung zugrundeliegende Aufgabe wird durch ein Verfahren zum Betrieb einer elektronischen Kamera mit einem Sensorteil aus MOS-Kondensatoren zur Erfassung eines optischen Bildes und einer automatischen Einstellung der Bildhelligkeit gelöst, bei dem an die Sensorkondensatoren derartige Spannungen gelegt werden, dass in ihnen Minoritätsträger in einer derartigen Menge, die der Helligkeit der Bildpunkte entspricht, optisch erzeugt und gespeichert werden (Integration), und dabei hervorgerufene Signale periodisch unter Entleerung der Kondensatoren ausgelesen werden, bei dem die Sensorkondensatoren zwischen dem periodischen Auslesen jeweils vor dem Anlegen der zur Integration der Minoritätsträger nötigen Spannungen so vorgespannt werden, dass sich in ihnen nur Majoritätsträger sammeln (Akkumulation), bei dem der Zeitpunkt der Umschaltung von Akkumulation auf Integration so geregelt wird, dass die ausgelesenen Signale, gemittelt über alle Sensor-Kondensatoren, der angestrebten Bildhelligkeit entsprechen, bei dem als ein Istwert der Bildhelligkeit ein der Summe der Signale aller MOS-Kondensatoren entsprechender Wert gebildet wird und die Integrationsdauer durch Verschieben des Umschaltzeitpunktes verlängert bzw. verkürzt wird, wenn der Istwert einen vorgegebenen Sollwert nicht erreicht bzw. übersteigt, und wobei als Istwert vorzugsweise die Summe $\Sigma U_a$ der am Ende der vorangegangenen Periode ausgelesenen Signale gebildet und die Akkumulationszeit $t_1$ bis zum Umschaltzeitpunkt entsprechend der Abweichung $\Sigma U_a - U_s$ des Sollwerts vom Istwert gegenüber der Akkumulationszeit $t_1$ der vorangegangenen Periode verändert wird. Erfindungsgemäss ist dieses Verfahren dadurch gekennzeichnet, dass der Istwert gemessen wird, indem die Kondensatoren zu Beginn jeder Periode kurzzeitig auf Integration geschaltet und die dabei entstehenden Signale ausgelesen und aufsummiert werden.

Die Zeit zwischen zwei Auslesevorgängen ist also aufgeteilt in eine Akkumulationszeit, in der keine Minoritätsträger gesammelt werden, und die Integrationszeit, in der die optisch erzeugten Minoritätsträger, die in ihrer Menge der Helligkeit des entsprechenden Bildpunktes entsprechen, gesammelt werden. Die Integrationszeit entspricht also der Öffnungszeit (Belichtungszeit) bei Foto- und Filmkameras mit mechanisch öffnenden Verschlüssen, ohne dass jedoch hierzu eine mechanische Vorrichtung benötigt würde, die den Sensorteil ausserhalb der Belichtungszeiten vor Belichtung schützte. Durch eine Regelung für den Zeitpunkt der Umschaltung von Akkumulation auf Integration kann damit die Dauer zwischen dem Umschaltzeitpunkt und dem Auslesevorgang, also die Integrationszeit oder Belichtungszeit, automatisch geregelt werden. Diese Regelung erfolgt so, dass die Signale der einzelnen MOS-Kondensatoren im Mittel der angestrebten Bildhelligkeit entsprechen.

Die Regelung des Umschaltzeitpunktes kann vorteilhaft dadurch erfolgen, dass ein Istwert der Bildhelligkeit gebildet wird und mit einem vorgegebenen Sollwert verglichen wird. Der Istwert kann dadurch gebildet werden, dass an den MOS-Kondensatoren während der gleichen oder auch der vorangegangenen Periode Signale abgegriffen werden, die der Helligkeit der entsprechenden Bildpunkte entsprechen, und die Signale aufsummiert werden. So können z.B. die Kondensatoren zu Beginn jeder Periode kurzzeitig, z.B. einige Mikrosekunden, auf Integration geschaltet werden, wobei die entstehenden Signale ausgelesen und aufsummiert werden. Anschliessend wird bis zu Beginn der Integrationszeit auf Akkumulation geschaltet. Es kann aber der Istwert auch dadurch gebildet werden, dass die am Ende der vorangegangenen Periode ausgelesenen Signale aufsummiert werden, wobei natürlich darauf zu achten ist, dass dabei keine Rückwirkung auf die Verarbeitung der Signale zum Videosignal stattfindet. Der Sollwert wird so gebildet, dass er dem entsprechenden Istwert der Bildhelligkeit bei gleichmässiger Bestrahlung aller Sensoren mit der angestrebten Bildhelligkeit entspricht. Die Integrationsdauer wird nun dadurch geregelt, dass der Umschaltzeitpunkt entsprechend der Istwert/Sollwert-Differenz gewählt wird. So wird die Integrationsdauer verkürzt, d.h. der Umschaltzeitpunkt später gewählt, wenn der Istwert den Sollwert übersteigt.

In dem Fall, dass der Istwert aus den Signalen der vorangegangenen Periode gebildet wird, ist es vorteilhaft, entsprechend der Istwert/Sollwert-Abweichung den Umschaltzeitpunkt gegenüber dem Umschaltzeitpunkt der vorangegangenen Periode zu verändern, also bei zu grossem Istwert den Umschaltzeitpunkt später zu wählen und damit die Integrationszeit zu verkürzen.

Zur Durchführung des Verfahrens wird in die Leitung für die Gatespannungen der Sensorelemente (Kondensatoren) eine Umschalteinrichtung benötigt, um die Sensorspannungen auf Akkumulation bzw. Integration umzuschalten. Ferner ist eine Rechenstufe vorgesehen, die an die Sensorelemente angeschlossen ist und deren Ausgangssignale summiert, um einen Istwert für die Helligkeit, gemittelt über alle Sensoren, zu erhalten. Dieser Istwert wird mit einem vorgegebenen Sollwert verglichen. Am Ausgang der Rechenstufe ist ein Zeitgeber vorgesehen, dem die Istwert/Sollwert-Abweichung eingegeben wird und der entsprechend dieser Abweichung den Umschaltimpuls für die Umschalteinrichtung liefert.

Anhand zweier Ausführungsbeispiele und zweier Figuren wird die Erfindung näher erläutert.

Mit 1 ist der Sensorteil einer Kamera, z.B. einer Fernsehkamera, gezeigt, der in der Bildebene des Objektes der Kamera angeordnet ist und aus rasterförmig in der Bildebene verteilten Sensorelementen zur punktweisen Erfassung des Bildes besteht. Als Sensorelemente dienen auf einem Halbleiterkörper integrierte MOS-Kondensatoren. Bei einem p-dotierten Substrat werden in diesen Sensoren bei Anlegen einer gegenüber dem Substratanschluss negativen Gatespannung $U_g$ Majoritätsträger akkumuliert. Eine positive Gatespannung $U_g$ jedoch bedeutet ein Sammeln der optisch erzeugten Minoritätsträger, deren Menge jeweils der Intensität des auf das betreffende Sensorelement fallenden Bildpunktes entspricht. Die Sensorelemente können nach dem Prinzip der Ladungsinjektion oder der Ladungskopplung betrieben werden und im Zwischenspalten-Verfahren (interline transfer) oder im bildorganisierten Verfahren (frame transfer) in ein Ausleseregister ausgelesen werden. Im Ausleseregister wird dabei eine Signalfolge erzeugt, deren Einzelsignale der Grösse der in den nacheinander angesteuerten Sensorelementen während der Integrationszeit optisch erzeugten Ladungsträgerpakete entspricht.

Mit $U_a$ ist die am Ausgang 2 der Sensor-Ausgangsstufe erzeugte, gegebenenfalls verstärkte Signalfolge bezeichnet. Diese Signalfolge $U_a$ wird einem äusseren Triggersignal folgend, jeweils periodisch zu den Zeitpunkten $T_0$ ausgelesen. Am Eingang 3 wird die Gate-Spannung der Sensorelemente angelegt, wobei bei der Spannung $U_1$ Akkumulation, bei der Spannung $U_2$ Integration stattfindet.

Die Zeitspanne zwischen den durch die externe Triggerung vorgegebenen Auslesezeitpunkten $T_0$ wird durch den Umschaltzeitpunkt T der Gatespannung in zwei Intervalle geteilt, nämlich zuerst die Akkumulationszeit $t_1$ (mit $U_g = U_1$) und die Integrationszeit mit ($U_g = U_2$). Mit wachsender Akkumulationszeit $t_1$ nimmt also die Integrationszeit ab und damit auch die Helligkeit des ausgelesenen Bildes. Die Bildhelligkeit wird dadurch geregelt, dass der Umschaltzeitpunkt entsprechend der Abweichung eines Istwertes für die Bildhelligkeit von einem Sollwert geregelt wird.

Als Istwert wird dabei die Summe $\Sigma U_a$ aller während einer Periode ausgelesenen Sensorsignale verwendet. Der Sollwert $U_s$ wird so vorgegeben, dass er dem Istwert bei angestrebter optimaler Bildhelligkeit entspricht. Die Regelung der Bildhelligkeit erfolgt in diesem Beispiel so, dass die prozentuale Differenz zwischen Sollwert und Istwert gebildet wird und die Akkumulationszeit in der darauffolgenden Periode entsprechend vergrössert wird, wenn in der vorangegangenen Periode die Akkumulationszeit $t_1$ zu kurz, also die Integrationszeit zu lang und damit die Helligkeit zu gross ($\Sigma U_a > U_s$) war.

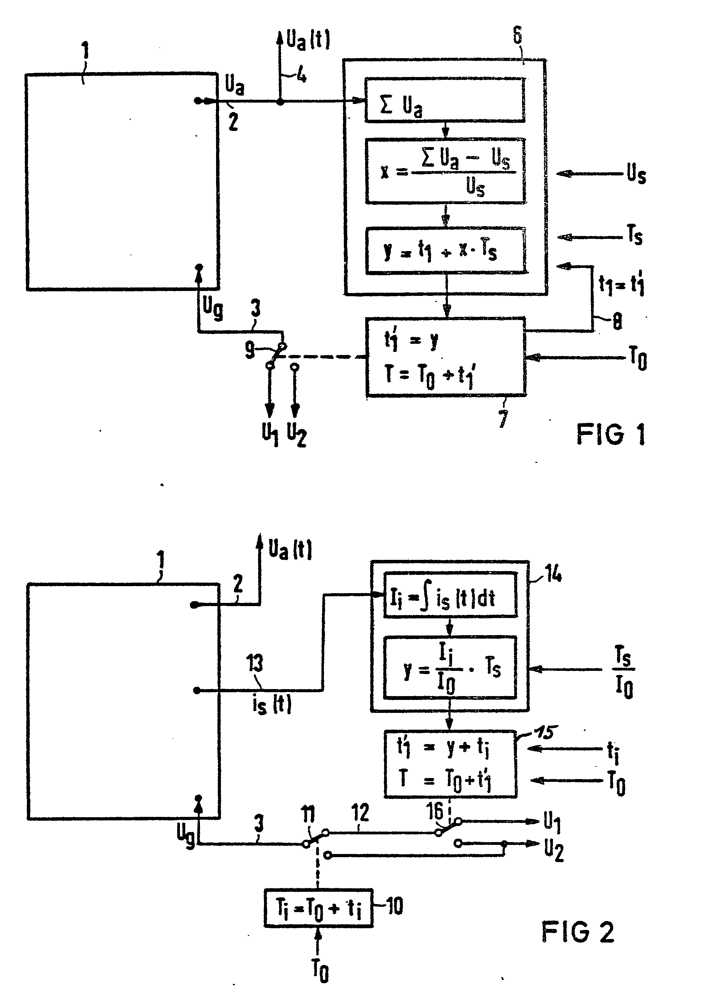

Wie in Fig. 1 dargestellt, wird in diesem Ausführungsbeispiel die am Ausgang 2 der Sensorausgangsstufe auftretende Signalfolge $U_a$, üblicherweise eine Spannungskurve, rückwirkungsfrei abgegriffen und einer aus handelsüblichen Rechenbausteinen zusammengesetzten Rechenstufe 6 zugeführt. Dort werden die Einzelsignale $U_a$ aufsummiert, im einfachsten Falle in einem Integrator. Dann wird die Regelabweichung x gebildet und daraus eine Führungsgrösse y für die Akkumulationszeit $t_1$ der nachfolgenden Periode berechnet nach dem Zusammenhang $y = t_1 + x \cdot T_s$.

$T_s$ ist dabei die maximale zugelassene Akkumulationszeit, die etwas kleiner gewählt wird als die Periodendauer zwischen den Auslesevorgängen $T_0$. Das Ausgangssignal der Rechenstufe 6, in der Regel ein Spannungssignal, wird auf einen spannungsgesteuerten Zeitgeber 7 gegeben. Die Rechenstufe 6 und der Zeitgeber 7 werden durch eine externe Triggerleitung im Triggertakt der Auslesezeitpunkte $T_0$ derart rückgesetzt, dass in der Rechenstufe 6 die Grössen $\Sigma U_a$, x und y = 0 gesetzt werden und der Zeitgeber jeweils mit dem Zeitpunkt $T_0$ zu laufen beginnt. Der Zeitgeber, z.B. der spannungsgesteuerte Zeitgeber NE 555 der Firma «Signetics», schaltet dann zum Zeitpunkt

$T_0 + t_1$, in der nachfolgenden Periode mittels einer Schalteinrichtung 9 die Gatespannung von der Akkumulationsspannung $U_1$ auf die Integrationsspannung $U_2$ um. Gleichzeitig wird der Wert y in eine Speicherzelle der Rückführungsleitung 8 eingegeben, von der er bei der nachfolgenden Periode als Akkumulationszeit $t_1$ zur Berechnung der neuen Führungsgrösse y abgerufen wird.

Die Bildhelligkeit kann jedoch auch auf andere Weise gesteuert werden, wie in Fig. 2 dargestellt ist.

Dabei wird das Ausgangssignal $U_a$ eines Sensorteils 1 wieder über eine Ausgangsleitung 2 entnommen und die Gatespannung $U_g$ für die Sensorelemente über eine Leitung 3 eingegeben.

Zur Bestimmung des Istwertes der Bildhelligkeit werden die Sensorelemente zu Beginn einer Periode während einer gegenüber der Periodendauer kurzen Zeit $t_i$, z.B. einige Mikrosekunden, auf Integrationsspannung $U_2$ gelegt. Während dieser Zeit werden in den Sensorelementen Minoritätsträger gesammelt. Anschliessend werden die Sensorelemente auf Akkumulation geschaltet (Spannung $U_1$) wobei es zunächst zur Injektion der während der Zeit $t_i$ erzeugten Minoritätsträger kommt. Dadurch fliesst ins Substrat kurzzeitig ein Strom $i_s$, der – alle Sensorelemente gemittelt – ein Istwert für die Lichtstärke des einfallenden Bildes darstellt. Der Umschaltzeitpunkt von Akkumulation auf Integration wird nun so gesteuert, dass das Produkt dieses Istwertes mit der Integrationszeit (Belichtungszeit) einen vorgegebenen Sollwert für die Bildhelligkeit erreicht.

Im Ausführungsbeispiel nach Fig. 2 wird durch einen ersten Zeitgeber 10, der im Takt des Auslesezeitpunktes $T_0$ extern getriggert wird, die Sensorspannung $U_g$ mittels eines Schalters 11 auf die Integrationsspannung $U_2$ gelegt und nach der vorgegebenen kurzen Zeitspanne $t_i$ auf die zur Spannungsquelle für die Akkumulationsspannung $U_1$ führende Leitung 12 umgeschaltet. Die in dieser ersten Integration gesammelten optisch erzeugten Ladungen werden beim Umschalten ins Substrat injiziert und der dabei fliessende Strom wird über einen Substratanschluss 13 in die Rechenstufe 14 eingegeben. In einem Integrationsglied wird das der Summe aller injizierten Ladungen entsprechende Integral $I_i$ dieser Ströme gebildet. Für den oben erwähnten Sollwert wird die maximal zugelassene Akkumulationszeit (minimale Belichtungszeit) gewählt, die mit einem passend gewählten Proportionalitätsfaktor $1/I_0$ versehen wird. Als Führungsgrösse für den Umschaltzeitpunkt wird in diesem Beispiel die einer Integrationszeit entsprechende Grösse

$$y = T_s \cdot I_i / I_0$$

berechnet. Durch Addition der kurzen Zeitspanne $t_i$ für die erste Akkumulation wird die Zeitspanne $t_1$, zwischen den Triggerzeitpunkten $T_0$ und dem Umschaltzeitpunkt T gebildet. Dieser für die Zeitspanne $t_1$ berechnete Wert wird einem spannungsgeregelten Zeitgeber 15 eingegeben. Die Rechenstufe 14 und der Zeitgeber 15 werden, wie im vorangegangenen Ausführungsbeispiel, jeweils mit den externen Triggersignalen $T_0$ rückgesetzt, so dass die Rechenstufe jeweils zum Startpunkt $T_0$ jeder Periode neu mit der Berechnung beginnt und der Zeitgeber 15 zum Zeitpunkt $T_0 + t_1$ einen Impuls abgibt. Mit diesem Impuls wird ein weiterer Schalter 16 betätigt, der den Eingang 3 für die Sensor-Gatespannungen zum Zeitpunkt T von der Akkumulationsspannung $U_1$ auf die Integrationsspannung $U_2$ umschaltet.

Weitere Einzelheiten des Sensors, wie Taktgeber zur Ansteuerung der Sensorelemente und zum Auslesen der Sensorsignale, Ausleseregister usw., entsprechen dem Stand der Technik und sind nicht näher beschrieben. Ferner sind in den Rechenstufen 6 und 14 übliche Vorkehrungen getroffen, mit denen die Werte für die Akkumulationszeit $t_1$, auf die maximal zugelassene Akkumulationszeit $T_s$ begrenzt werden.

Mechanische Teile, z.B. ein sich nur während der Belichtungszeit öffnender Verschluss, werden dabei nicht benötigt. Die Integrationszeit kann damit über zwei bis drei Zehnerpotenzen hinweg automatisch exakt geregelt werden. In den Fällen, in denen zwischen der geringsten, noch für Bildaufnahmen geeigneten Bildhelligkeit und der bei starker Ausleuchtung der aufzunehmenden Objekte auftretenden Bildhelligkeit bis zu 5 Zehnerpotenzen liegen, kann noch zusätzlich eine Grobeinstellung mittels einer dreistufigen, manuell einstellbaren Blende vorgenommen werden.

## Patentansprüche

1. Verfahren zum Betrieb einer elektronischen Kamera mit einem Sensorteil aus MOS-Kondensatoren zur Erfassung eines optischen Bildes und einer automatischen Einstellung der Bildhelligkeit, bei dem an die Sensorkondensatoren derartige Spannungen gelegt werden, dass in Ihnen Minoritätsträger in einer derartigen Menge, die der Helligkeit der Bildpunkte entspricht, optisch erzeugt und gespeichert werden (Integration), und dabei hervorgerufene Signale periodisch unter Entleerung der Kondensatoren ausgelesen werden, bei dem die Sensorkondensatoren zwischen dem periodischen Auslesen jeweils vor dem Anlegen der zur Integration der Minoritätsträger nötigen Spannungen so vorgespannt werden, dass sich in ihnen nur Majoritätsträger sammeln (Akkumulation), bei dem der Zeitpunkt der Umschaltung von Akkumulation auf Integration so geregelt wird, dass die ausgelesenen Signale, gemittelt über alle Sensor-Kondensatoren, der angestrebten Bildhelligkeit entsprechen, bei dem als ein Istwert der Bildhelligkeit ein der Summe der Signale aller MOS-Kondensatoren entsprechender Wert gebildet wird und die Integrationsdauer durch Verschieben des Umschaltzeitpunktes verlängert bzw. verkürzt wird, wenn der Istwert einen vorgegebenen Sollwert nicht erreicht bzw. übersteigt, und wobei als Istwert vorzugsweise die Summe $\Sigma U_a$ der am Ende der vorangegangenen Periode ausgelesenen Signale gebildet und die Akkumulationszeit $t_1$ bis zum Umschaltzeitpunkt entsprechend der Abweichung $\Sigma U_a - U_s$ des Sollwerts vom Istwert gegenüber der Akkumulationszeit $t_1$ der vorangegangenen Periode verändert wird, dadurch gekennzeichnet, dass der Istwert gemessen wird, indem die Kondensatoren zu Beginn jeder Periode kurzzeitig auf Integration geschaltet und die dabei entstehenden Signale ausgelesen und aufsummiert werden.

2. Vorrichtung zur Durchführung des Verfahrens nach Anspruch 1, dadurch gekennzeichnet, dass eine Umschaltvorrichtung (9) zum Umschalten der Gatespannungen an den Sensor-Kondensatoren von Akkumulation auf Integration, eine Rechenstufe (6), welche Ausgangssignale $(U_a)$ der Sensorelemente aufsummiert und den Summenwert $(\Sigma U_a)$ mit einem vorgegebenen Sollwert $(U_s)$ vergleicht, und ein regelbarer Zeitgeber (7), der entsprechend der Sollwert/Istwert-Abweichung den Umschaltimpuls für die Umschalteinrichtung gibt, vorgesehen sind.

## Claims

1. A process for the operation of an electronic camera comprising a sensor element, which consists of MOS-capacitors for detecting an optical image, and an automatic adjusting unit for the image brightness, wherein the sensor capacitors are connected to voltages of such a kind that the quantity of minority carriers optically produced and stored (integration) in these sensor capacitors corresponds to the brightness of the image points, and signals generated thereby are periodically read out by emptying the capacitors, and wherein between the periodical read out processes, in each case before the application of the voltages required for the integration of the minority carriers, the sensor capacitors are biased in such manner that only majority carriers accumulate therein (accumulation), and wherein the time of the change-over from accumulation to integration is so regulated that the read-out signals averaged by means of all sensor capacitors correspond to the requisite image brightness and wherein a value which corresponds to the sum of the signals of all MOS-capacitors is formed as an actual value of the image brightness and the duration of integration is lengthened or shortened by delaying the change-over time if the actual value does not reach or exceed a predetermined theoretical value, and wherein preferably the sum $\Sigma U_a$ of the signals which were read out at the end of the preceding period is formed as the actual value, and the accumulation time $t_1$ until the change-over time is varied in relation to the accumulation time $t_1$ of the previous period in accordance with the deviation $\Sigma U_a - U_s$ of the theoretical value from the actual value, characterised in that the actual value is measured at the beginning of each period by temporarily switching the capacitors to integration and the resultant signals read out and summed up.

2. A device for carrying out the process as claimed in claim 1, characterised in that there are provided a change-over device (9) for changing over the gate voltages at the sensor capacitors from accumulation to integration, a calculating stage (6) which sums up output signals $(U_a)$ of the sensor elements and compares the summation value $(\Sigma U_a)$ with a predetermined theoretical value $(U_s)$, and a controllable timing-pulse generator (7) which generates the change-over impulse for the change-over device in accordance with the theoretical value/actual value-deviation.

## Revendications

1. Procédé pour opérer une caméra électronique à élément détecteur à condensateurs MOS pour saisir une image optique et à réglage automatique de la luminosité de l'image, du type dans lequel on applique aux condensateurs de détection des tensions telles qu'on forme optiquement et qu'on mémorise dans ceux-ci une quantité de porteurs minoritaires qui correspondent à la luminosité des points d'image (intégration), les signaux qui sont ainsi provoqués étant lus périodiquement avec déchargement des condensateurs, dans lequel les condensateurs de détection sont polarisés, entre les lectures périodiques et avant l'application des tensions nécessaires pour l'intégration des porteurs minoritaires, de telle manière que seuls des porteurs majoritaires s'y accumulent (accumulation), dans lequel l'instant de la commutation de l'accumulation à l'intégration est réglé de telle manière que les signaux lus, pris dans leur moyenne par rapport à tous les condensateurs de détection, correspondent à la luminosité d'image recherchée, dans lequel on forme, en tant que valeurs instantanées de la luminosité de l'image, une valeur qui correspond à la somme des signaux de tous les condensateurs MOS et on allonge ou réduit la durée d'intégration par décalage de l'instant de commutation lorsque la valeur instantanée n'atteint pas ou dépasse une valeur de référence prédéterminée, la valeur instantanée étant de préférence formée par la somme $\Sigma U_a$ des signaux lus à la fin de la période antérieure et la durée d'accumulation $t_1$ jusqu'à l'instant de la commutation étant modifiée en fonction de l'écart $\Sigma U_a - U_s$ de la valeur de référence de la valeur instantanée par rapport à la durée d'accumulation $t_1$ de la période antérieure, caractérisé par le fait que la valeur instantanée est mesurée en commutant, pour une courte durée et au début de chaque période, les condensateurs sur intégration, les signaux qui se forment étant lus et étant additionnés.

2. Dispositif pour la mise en œuvre du procédé selon la revendication 1, caractérisé par le fait qu'il est prévu un dispositif de commutation (9) pour commuter les tensions de porte appliquées aux conducteurs de détection de l'accumulation à l'intégration, un étage de calcul (6) qui totalise les signaux de sortie $(U_a)$ des éléments de détection et qui compare la valeur du total $(\Sigma U_a)$ avec la valeur de référence prédéterminée $(U_s)$, ainsi qu'un rythmeur réglable (7) qui fournit, en fonction de l'écart valeur de référence/valeur instantanée, l'impulsion de commutation pour le dispositif de commutation.

FIG 1

FIG 2